# DEMANDE DE BREVET EUROPEEN

(11) **EP 3 643 767 A1**
(43) Date de publication de la demande: **29.04.2020**
(21) Numéro de dépôt: 19203405.6
(22) Date de dépôt: 15.10.2019
(51) Int. Cl.: C10G 2/00, C07C 1/04, B01J 23/75, B01J 37/02

(54) **PROCEDE DE SYNTHESE FISCHER-TROPSCH COMPRENANT UN CATALYSEUR PREPARE PAR ADDITION D'UN COMPOSE ORGANIQUE EN PHASE GAZEUSE**

(30) Priorité: 25.10.2018 FR 1871301
(71) Demandeur: IFP Energies nouvelles, 92852 Rueil-Malmaison Cedex (FR)
(72) Inventeur: GUILLOU, Florent, 92852 RUEIL-MALMAISON CEDEX (FR); CARRETTE, P-Louis, 92852 RUEIL-MALMAISON CEDEX (FR); GUICHARD, Bertrand, 92852 RUEIL-MALMAISON CEDEX (FR); DELCROIX, Damien, 92852 RUEIL-MALMAISON CEDEX (FR)

(57) **Abrégé**

Procédé Fischer-Tropsch de synthèse d'hydrocarbures par mise en contact d'un catalyseur comprenant un support et une phase active comprenant un métal du groupe VIII avec une charge comprenant du gaz de synthèse, ledit catalyseur étant préparé selon les étapes suivantes :
a) on approvisionne un support poreux ;
b) on additionne au support poreux un composé organique contenant de l'oxygène et/ou de l'azote ;
c) on réalise une étape de mise en contact dudit support poreux avec une solution contenant un sel de précurseur de la phase comprenant un métal du groupe VIII ;
d) on sèche le support poreux obtenu à l'issue de l'étape c) ;
caractérisé en ce que l'étape b) est réalisée par mise en présence dudit support poreux et dudit composé organique dans des conditions de température, de pression et de durée telles qu'une fraction dudit composé organique est transférée à l'état gazeux au support poreux.

## Description

### Domaine technique

L'invention a pour objet un procédé de synthèse Fischer-Tropsch qui permet d'obtenir une large gamme de coupes hydrocarbonées à partir du mélange CO + H₂, communément appelé gaz de synthèse (« *syngas* » selon la terminologie anglo-saxonne). Le procédé de synthèse Fischer-Tropsch est réalisé en présence d'un catalyseur préparé selon un mode opératoire particulier.

### Etat de la technique

Les procédés de synthèse Fischer-Tropsch permettent d'obtenir une large gamme de coupes hydrocarbonées à partir du mélange CO + H2, communément appelé gaz de synthèse. L'équation globale de la synthèse Fischer-Tropsch peut s'écrire de la manière suivante :

n CO + (2n+1) H₂ → CₙH₂ₙ₊₂ + n H₂O

La synthèse Fischer-Tropsch est au coeur des procédés de conversion du gaz naturel, du charbon ou de la biomasse en carburants ou en intermédiaires pour l'industrie chimique. Ces procédés sont appelés GTL (« Gas to Liquids » selon la terminologie anglo-saxonne) dans le cas de l'utilisation de gaz naturel comme charge initiale, CTL (« Coal to Liquids » selon la terminologie anglo-saxonne) pour le charbon, et BTL (« Biomass to Liquids » selon la terminologie anglo-saxonne) pour la biomasse.

Dans chacun de ces cas, la charge initiale est tout d'abord gazéifiée en un gaz de synthèse qui comprend un mélange de monoxyde de carbone et de dihydrogène. Le gaz de synthèse est ensuite transformé majoritairement en paraffines grâce à la synthèse Fischer-Tropsch, et ces paraffines peuvent ensuite être transformées en carburants par un procédé d'hydroisomérisation-hydrocraquage. Par exemple, des procédés de transformation tels que l'hydrocraquage, le déparaffinage, et l'hydroisomérisation des coupes lourdes (C16+) permettent de produire différents types de carburants dans la gamme des distillats moyens: gazole (coupe 180-370°C) et kérosène (coupe 140-300°C). Les fractions plus légères C5-C15 peuvent être distillées et utilisées comme solvants.

La réaction de synthèse Fischer-Tropsch peut être réalisée dans différents types de réacteurs (lit fixe, mobile, ou triphasique (gaz, liquide, solide) par exemple de type autoclave parfaitement agité, ou colonne à bulles), et les produits de la réaction présentent notamment la caractéristique d'être exempts de composés soufrés, azotés ou de type aromatique.

Dans une mise en oeuvre dans un réacteur de type colonne à bulles (ou "slurry bubble column" selon la terminologie anglaise, ou encore "slurry" dans une expression simplifiée), un catalyseur divisé à l'état de poudre très fines, typiquement de l'ordre de quelques dizaines de micromètres est mis en oeuvre, cette poudre formant une suspension avec le milieu réactionnel.

La réaction Fischer-Tropsch se déroule de manière classique entre 1 et 4 MPa (10 et 40 bars), à des températures comprises traditionnellement entre 200°C et 350°C. La réaction est globalement exothermique, ce qui nécessite une attention particulière à la mise en oeuvre du catalyseur.

Les catalyseurs utilisés en synthèse Fischer-Tropsch sont le plus souvent des catalyseurs supportés à base d'alumine, de silice ou de silice-alumine ou de combinaisons de ces supports, la phase active étant principalement constituée de fer (Fe) ou de cobalt (Co) éventuellement dopée par un métal noble tel que le Pt, le Rh ou le Ru.

L'activité et la sélectivité des catalyseurs de synthèse Fischer-Tropsch dépendent des propriétés intrinsèques de la phase active telles que la taille des particules métalliques et la répartition de la phase active au sein du support.

La voie la plus classique de préparation de ces catalyseurs consiste en la réalisation d'une ou plusieurs étapes d'imprégnation du support par une solution aqueuse d'un précurseur de la phase active, suivie chacune généralement d'une étape de séchage et d'une étape de calcination. Avant leur utilisation dans des réactions de synthèse Fischer-Tropsch, ces catalyseurs sont généralement réduits afin d'obtenir la phase active sous forme métallique (c'est-à-dire à l'état de valence zéro).

Par ailleurs, en vue d'obtenir de meilleures performances catalytiques, notamment une meilleure sélectivité et/ou activité, il est connu dans l'état de la technique d'utiliser des additifs de type composés organiques pour la préparation de catalyseurs métalliques, notamment pour des catalyseurs qui ont été préparés par imprégnation suivie éventuellement d'une étape de maturation et suivie d'une étape de séchage. De nombreux documents décrivent l'utilisation de différentes gammes de composés organiques tels que des composés organiques contenant de l'azote et/ou des composés organiques contenant de l'oxygène. Par exemple, La demande de brevet US 2005/0026776 enseigne l'utilisation de composés chélatants de type acide nitrilotriacétique (NTA), acide trans-1,2-cyclohexadiamine-N,N,N',N' tétraacétique (CyDTA) ou acide éthylènediaminetétraacétique (EDTA), ou encore de glycine, d'acide aspartique ou acide citrique pour l'obtention d'un catalyseur à taille réduite de cristallites Co₃O₄. D'autres documents enseignent l'utilisation de polyéthers (WO2014/092278 et WO2015/183061), d'acide glyoxylique (WO2015/183059), d'acides dicarboxyliques insaturés (US2011/0028575) ou encore d'acides carboxyliques multifonctionnels de formule HOOC-(CRR¹)ₙ-COOH avec n ≥ 1 dans la préparation de catalyseurs de synthèse Fischer-Tropsch (WO98/47618).

Les procédés de préparation des catalyseurs additivés mettent en oeuvre typiquement une étape d'imprégnation dans laquelle le composé organique est introduit, éventuellement en solution dans un solvant, de manière à remplir toute la porosité du support imprégné ou non de précurseurs métalliques afin d'obtenir une répartition homogène. Cela conduit inévitablement à utiliser de grandes quantités de composés ou à diluer le composé organique dans un solvant. Après imprégnation, une étape de séchage est alors nécessaire pour éliminer l'excédent de composé ou le solvant et ainsi libérer la porosité nécessaire à la mise en oeuvre du catalyseur. Au surcoût lié à l'excédent du composé organique ou à l'utilisation d'un solvant s'ajoute le coût d'une étape unitaire de préparation supplémentaire de séchage, consommatrice d'énergie. Lors de l'étape de séchage, l'évaporation du solvant peut aussi s'accompagner d'une perte partielle du composé organique par vaporisation et donc d'une perte d'activité catalytique.

La Demanderesse a découvert de manière surprenante qu'un catalyseur comprenant une phase active à base d'au moins un métal du groupe VIII, de préférence le cobalt, supportée sur une matrice oxyde préparé à partir d'un procédé de préparation comprenant au moins une étape d'addition d'un composé organique sur le support poreux par imprégnation en phase gazeuse permet l'obtention de performances en terme d'activité et/ou de sélectivité en synthèse Fischer-Tropsch au moins aussi bonnes, voire meilleures, que les procédés connus de l'état de la technique. Sans vouloir se lier à aucune théorie, il semble que l'addition par voie gazeuse de l'additif organique lors de la préparation du catalyseur permet d'obtenir des performances en synthèse Fischer-Tropsch en terme d'activité et/ou sélectivité au moins aussi bonnes, voir meilleures, que des catalyseurs connus dont le procédé de préparation comprend une étape d'addition d'un même additif organique par voie liquide (par exemple par imprégnation à sec) quand bien même la taille des particules de phase active obtenues sur le catalyseur (mesurées sous leurs formes oxyde) est équivalente.

### Objets de l'invention

La présente invention a pour objet un procédé Fischer-Tropsch de synthèse d'hydrocarbures par mise en contact d'un catalyseur comprenant un support poreux et une phase active comprenant au moins un métal du groupe VIII avec une charge comprenant du gaz de synthèse sous une pression totale comprise entre 0,1 et 15 MPa, sous une température comprise entre 150 et 350°C, et à une vitesse volumique horaire comprise entre 100 et 20000 volumes de gaz de synthèse par volume de catalyseur et par heure avec un rapport molaire H₂/CO du gaz de synthèse compris entre 0,5 et 4, ledit catalyseur étant préparé selon au moins les étapes suivantes :
a) on approvisionne un support poreux contenant de la silice, de l'alumine, et au moins une phase spinelle simple MAl₂O₄ ou mixte MₓM'₍₁₋ₓ₎Al₂O₄ partielle ou non, où M et M' sont des métaux distincts choisis dans le groupe constitué par le magnésium (Mg), le cuivre (Cu), le cobalt (Co), le nickel (Ni), l'étain (Sn), le zinc (Zn), le lithium (Li), le calcium (Ca), le césium (Cs), le sodium (Na), le potassium (K), le fer (Fe) et le manganèse (Mn) et où x est compris entre 0 et 1, les valeurs 0 et 1 étant elles-mêmes exclues ;
b) on additionne au support poreux au moins un composé organique contenant de l'oxygène et/ou de l'azote mais ne comprenant pas de soufre ;
c) on réalise une étape de mise en contact dudit support poreux avec au moins une solution contenant au moins un sel de précurseur de la phase comprenant au moins un métal du groupe VIII ;
d) on sèche le support poreux obtenu à l'issue de l'étape c) ;
caractérisé en ce que l'étape b) est réalisée avant ou après les étapes c) et d) et est réalisée par mise en présence dudit support poreux et dudit composé organique dans des conditions de température, de pression et de durée telles qu'une fraction dudit composé organique est transférée à l'état gazeux au support poreux.

Dans une variante de réalisation selon l'invention, l'étape b) est réalisée par mise en présence simultanée dudit support poreux et dudit composé organique à l'état liquide et sans contact physique entre ledit support poreux et ledit composé organique à l'état liquide, à une température inférieure à la température d'ébullition dudit composé organique et dans des conditions de pression et de durée telles qu'une fraction dudit composé organique est transférée à l'état gazeux au support poreux.

De préférence, l'étape b) est réalisée au moyen d'une unité d'addition dudit composé organique comprenant un premier et un second compartiments en communication de manière à permettre le passage d'un fluide gazeux entre les compartiments, le premier compartiment contenant le support poreux et le second compartiment contenant le composé organique à l'état liquide.

De préférence, l'unité comprend une enceinte incluant les premier et second compartiments, les deux compartiments étant en communication par voie gazeuse.

De préférence, l'unité comprend deux enceintes formant respectivement le premier et le second compartiments, les deux enceintes étant en communication par voie gazeuse.

De préférence, l'étape b) est réalisée en présence d'un flux d'un gaz vecteur circulant du second compartiment dans le premier compartiment.

Dans une deuxième variante de réalisation selon l'invention, l'étape b) est réalisée par mise en présence dudit support poreux avec un solide poreux comprenant ledit composé organique dans des conditions de température, de pression et de durée telles qu'une fraction dudit composé organique est transférée par voie gazeuse dudit solide poreux audit support poreux.

De préférence, l'étape b) est réalisée par mise en présence sans contact physique dudit support poreux avec ledit solide poreux comprenant ledit composé organique.

De préférence, lors de l'étape b), le support poreux et le solide poreux comprenant ledit composé organique sont de porosité et/ou de nature chimique différente(s).

De préférence à l'issue de l'étape b), le solide poreux contenant le composé organique est séparée dudit support poreux et est renvoyé à l'étape b).

Avantageusement, ledit composé organique est choisi parmi un composé comportant une ou plusieurs fonctions chimiques choisies parmi une fonction carboxylique, alcool, ester, amine, amide, éther, dilactone, carboxyanhydride, aldéhyde, cétone, nitrile, imide, oxime, urée.

Avantageusement, ledit composé organique comporte au moins une fonction carboxylique choisi parmi l'acide éthanedioïque (acide oxalique), l'acide propanedioïque (acide malonique), l'acide butanedioïque (acide succinique), l'acide 4-oxopentanoïque (acide lévulinique) et l'acide 3-carboxy-3-hydroxypentanedioïque (acide citrique).

Avantageusement, ledit composé organique comporte au moins une fonction alcool choisi parmi le méthanol, l'éthanol, le phénol, l'éthylène glycol, le propane-1,3-diol, le glycérol, le sorbitol, le diéthylène glycol, les polyéthylène glycol ayant une masse molaire moyenne inférieure à 600 g/mol, le glucose, le fructose et le sucrose sous l'une quelconque de leurs formes isomères.

Avantageusement, ledit composé organique comporte au moins une fonction ester choisi parmi une γ-lactone ou une δ-lactone contenant entre 4 et 8 atomes de carbone, la γ-butyrolactone, la γ-valérolactone, le laurate de méthyle, le malonate de diméthyle, le succinate de diméthyle et le carbonate de propylène.

Avantageusement, ledit composé organique comporte au moins une fonction amine choisi parmi l'aniline, l'éthylènediamine, le diaminohexane, la tétraméthylènediamine, l'hexaméthylènediamine, la tétraméthyléthylènediamine, la tétraéthyléthylènediamine, la diéthylènetriamine et la triéthylènetétramine.

Avantageusement, ledit composé organique comporte au moins une fonction amide choisi parmi la formamide, la N-méthylformamide, la N,N-diméthylformamide, la 2-pyrrolidone, la N-méthyl-2-pyrrolidone, la gamma-valérolactame et la N,N'-diméthylurée.

Avantageusement, ledit composé organique comporte au moins une fonction carboxyanhydride choisi dans le groupe des O-carboxyanhydrides constitué par la 5-méthyl-1,3-dioxolane-2,4-dione et l'acide 2,5-dioxo-1,3-dioxolane-4-propanoïque, ou dans le groupe des N-carboxyanhydrides constitué par la 2,5-oxazolidinedione et la 3,4-diméthyl-2,5-oxazolidinedione.

Avantageusement, ledit composé organique comporte au moins une fonction dilactone choisi dans le groupe des dilactones cycliques de 4 chaînons constitué par la 1,2-dioxétanedione, ou dans le groupe des dilactones cycliques de 5 chaînons constitué par la 1,3-dioxolane-4,5-dione, la 1,5-dioxolane-2,4-dione, et la 2,2-dibutyl-1,5-dioxolane-2,4-dione, ou dans le groupe des dilactones cycliques de 6 chaînons constitué par la 1,3-dioxane-4,6-dione, la 2,2-diméthyl-1,3-dioxane-4,6-dione, la 2,2,5-triméthyl-1,3-dioxane-4,6-dione, la 1,4-dioxane-2,5-dione, la 3,6-diméthyl-1,4-dioxane-2,5-dione, la 3,6-diisopropyl-1,4-dioxane-2,5-dione, et la 3,3-ditoluyl-6,6-diphényl-1,4-dioxane-2,5-dione, ou dans le groupe des dilactones cycliques de 7 chaînons constitué par la 1,2-dioxépane-3,7-dione, la 1,4-dioxépane-5,7-dione, la 1,3-dioxépane-4,7-dione et la 5-hydroxy-2,2-diméthyl-1,3-dioxépane-4,7-dione.

Avantageusement, ledit composé organique comporte au moins une fonction éther comportant au maximum deux fonctions éthers, et ne comportant pas de groupe hydroxyle, choisi dans le groupe des éthers linéaires constitué par le diéthyl éther, le dipropyl éther, le dibutyl éther, le methyl tert-butyl éther, le diisopropyl éther, le di-tert-butyl éther, le méthoxybenzène, le phényl vinyl éther, l'isopropyl vinyl éther et l'isobutyl vinyl éther, ou dans le groupe des éthers cycliques constitué par le tétrahydrofurane, 1,4-dioxane et la morpholine.

### Brève description des figures

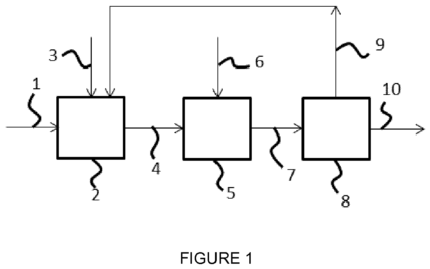

La figure 1 illustre de manière schématique un mode de réalisation de l'étape b) du procédé de préparation du catalyseur utilisé dans le cadre du procédé de synthèse Fischer-Tropsch selon l'invention.

### Description détaillée

### Définitions

Par « macropores », on entend des pores dont l'ouverture est supérieure à 50 nm.

Par « mésopores », on entend des pores dont l'ouverture est comprise entre 2 nm et 50 nm, bornes incluses.

Par « micropores », on entend des pores dont l'ouverture est inférieure à 2 nm.

On entend par volume poreux total du catalyseur ou du support utilisé pour la préparation du catalyseur selon l'invention le volume mesuré par intrusion au porosimètre à mercure selon la norme ASTM D4284-83 à une pression maximale de 4000 bar (400 MPa), utilisant une tension de surface de 484 dyne/cm et un angle de contact de 140°. L'angle de mouillage a été pris égal à 140° en suivant les recommandations de l'ouvrage «Techniques de l'ingénieur, traité analyse et caractérisation », pages 1050-1055, écrit par Jean Charpin et Bernard Rasneur.

Afin d'obtenir une meilleure précision, la valeur du volume poreux total correspond à la valeur du volume poreux total mesuré par intrusion au porosimètre à mercure mesurée sur l'échantillon moins la valeur du volume poreux total mesuré par intrusion au porosimètre à mercure mesurée sur le même échantillon pour une pression correspondant à 30 psi (environ 0,2 MPa).

Le volume des macropores et des mésopores est mesuré par porosimétrie par intrusion de mercure selon la norme ASTM D4284-83 à une pression maximale de 4000 bar (400 MPa), utilisant une tension de surface de 484 dyne/cm et un angle de contact de 140°. On fixe à 0,2 MPa la valeur à partir de laquelle le mercure remplit tous les vides intergranulaires, et on considère qu'au-delà le mercure pénètre dans les pores de l'échantillon.

Le volume macroporeux du catalyseur ou du support utilisé pour la préparation du catalyseur selon l'invention est défini comme étant le volume cumulé de mercure introduit à une pression comprise entre 0,2 MPa et 30 MPa, correspondant au volume contenu dans les pores de diamètre apparent supérieur à 50 nm.

Le volume mésoporeux du catalyseur ou du support utilisé pour la préparation du catalyseur selon l'invention est défini comme étant le volume cumulé de mercure introduit à une pression comprise entre 30 MPa et 400 MPa, correspondant au volume contenu dans les pores de diamètre apparent compris entre 2 et 50 nm.

Le volume des micropores est mesuré par porosimétrie à l'azote. L'analyse quantitative de la microporosité est effectuée à partir de la méthode "t" (méthode de Lippens-De Boer, 1965) qui correspond à une transformée de l'isotherme d'adsorption de départ comme décrit dans l'ouvrage « Adsorption by powders and porous solids. Principles, methodology and applications » écrit par F. Rouquérol, J. Rouquérol et K. Sing, Academic Press, 1999.

On définit également le diamètre médian mésoporeux comme étant le diamètre tel que tous les pores, parmi l'ensemble des pores constituant le volume mésoporeux, de taille inférieure à ce diamètre constituent 50% du volume mésoporeux total déterminé par intrusion au porosimètre à mercure.

On définit également le diamètre médian macroporeux comme étant le diamètre tel que tous les pores, parmi l'ensemble des pores constituant le volume macroporeux, de taille inférieure à ce diamètre constituent 50% du volume macroporeux total déterminé par intrusion au porosimètre à mercure.

On entend par la surface spécifique du catalyseur ou du support utilisé pour la préparation du catalyseur selon l'invention, la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society », 60, 309, (1938).

On entend par taille des nanoparticules de cobalt, le diamètre moyen des cristallites de cobalt mesurée sous leurs formes oxyde. Le diamètre moyen des cristallites de cobalt sous forme oxyde est déterminé par diffraction des rayons X, à partir de la largeur de la raie de diffraction située à l'angle 2thêta=43° (c'est-à-dire selon la direction cristallographique [200]) à l'aide de la relation de Scherrer. Cette méthode, utilisée en diffraction des rayons X sur des poudres ou échantillons polycristallins, qui relie la largeur à mi-hauteur des pics de diffraction à la taille des particules, est décrite en détail dans la référence : Appl. Cryst. (1978), 11, 102-113 « Scherrer after sixty years: A survey and some new results in the détermination of crystallite size», J. I. Langford and A. J. C. Wilson.

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

### Description du procédé de préparation du catalyseur

D'une manière générale, le procédé de préparation du catalyseur utilisé dans le cadre du procédé de synthèse Fischer-Tropsch selon l'invention comprend au moins les étapes suivantes :
a) on approvisionne un support poreux contenant de la silice, de l'alumine, et au moins une spinelle simple MAl₂O₄ ou mixte MₓM'₍₁₋ₓ₎Al₂O₄ partielle ou non, où M et M' sont des métaux distincts choisis dans le groupe constitué par le magnésium (Mg), le cuivre (Cu), le cobalt (Co), le nickel (Ni), l'étain (Sn), le zinc (Zn), le lithium (Li), le calcium (Ca), le césium (Cs), le sodium (Na), le potassium (K), le fer (Fe) et le manganèse (Mn) et où x est compris entre 0 et 1, les valeurs 0 et 1 étant elles-mêmes exclues ;
b) on additionne sur ledit support poreux au moins un composé organique contenant de l'oxygène et/ou de l'azote, mais ne comprenant pas de soufre ;
c) on réalise une étape de mise en contact dudit support poreux avec au moins une solution contenant au moins un sel de précurseur de la phase active comprenant au moins un métal du groupe VIII ;
d) on sèche le support poreux obtenu à l'issue de l'étape c) ;
caractérisé en ce que l'étape b) est réalisée :
- avant ou après les étapes c) et d) ; et
- par mise en présence dudit support poreux et dudit composé organique dans des conditions de température, de pression et de durée telles qu'au moins une fraction dudit composé organique est transférée à l'état gazeux au support poreux.

Les étapes a) à d) du procédé de préparation du catalyseur utilisé dans le cadre du procédé de synthèse Fischer-Tropsch selon l'invention sont décrites plus en détail ci-après.

### Etape a)

Selon l'étape a) du procédé de préparation du catalyseur utilisé dans le cadre de l'invention, on approvisionne un support poreux contenant de la silice, de l'alumine, et au moins une spinelle simple MAl₂O₄ ou mixte MₓM'₍₁₋ₓ₎Al₂O₄ partielle ou non, où M et M' sont des métaux distincts choisis dans le groupe constitué par le magnésium (Mg), le cuivre (Cu), le cobalt (Co), le nickel (Ni), l'étain (Sn), le zinc (Zn), le lithium (Li), le calcium (Ca), le césium (Cs), le sodium (Na), le potassium (K), le fer (Fe) et le manganèse (Mn) et où x est compris entre 0 et 1, les valeurs 0 et 1 étant elles-mêmes exclues.

Plus particulièrement, l'étape a) comprend les sous-étapes suivantes :
a1) on fournit un support d'oxydes contenant de l'alumine et de la silice ;
a2) on imprègne le support contenant de l'alumine et de la silice par une solution aqueuse ou organique comprenant au moins un sel de métal M ou M' choisi dans le groupe constitué par le magnésium (Mg), le cuivre (Cu), le cobalt (Co), le nickel (Ni), l'étain (Sn), le zinc (Zn), le lithium (Li), le calcium (Ca), le césium (Cs), le sodium (Na), le potassium (K), le fer (Fe) et le manganèse (Mn), puis on sèche à une température comprise entre 60°C et 200°C et on calcine à une température entre 700 et 1200°C, de manière à obtenir une phase spinelle simple MAl₂O₄ ou mixte MₓM'₍₁₋ₓ₎Al₂O₄ partielle ou non, où M et M' sont des métaux distincts et où x est compris entre 0 et 1, les valeurs 0 et 1 étant elles-mêmes exclues ;

Selon l'étape a1), on fournit un support contenant de l'alumine et de la silice. La teneur en silice SiO₂ peut varier de 0,5% poids à 30% poids, de manière préférée de 1% poids à 30% poids, et de manière encore plus préférée de 1,5 à 20% poids par rapport au poids du support. De préférence, on fournit un support de silice-alumine. Un tel support peut être acheté ou fabriqué, par exemple par atomisation d'un précurseur d'alumine en présence d'un composé comprenant du silicium. Le support contenant de l'alumine et de la silice peut être préparé par tout autre moyen connu de l'Homme de l'Art, par exemple par imprégnation d'un composé organosilylé de type TEOS (tetraethylorthosilicate) sur une alumine. Dans ce cas, cette imprégnation, suivie d'un séchage et d'une calcination, est préliminaire à l'étape a) décrite ci-dessus.

Le solide contenant de l'alumine et de la silice peut ensuite être séché et calciné. Le séchage est avantageusement effectué à une température comprise entre 60°C et 200°C, de préférence pendant une durée allant de 30 minutes à trois heures. La calcination est avantageusement effectuée à une température comprise entre 200°C et 1100°C, de préférence pendant une durée allant de 1 heure à 24 heures, et de manière préférée de 2 heures à 8 heures. La calcination est généralement effectuée sous atmosphère oxydante, par exemple sous air, ou sous air appauvri en oxygène ; elle peut également être effectuée au moins en partie sous azote.

Toutes les étapes de séchage et de calcination décrites dans la présente description peuvent être réalisées par toute technique connue de l'Homme de l'Art : lit fixe, lit fluidisé, étuve, four à moufles, four tournant.

L'étape a2), consiste en l'imprégnation, de préférence à sec, dudit support contenant de l'alumine et de la silice, par une solution aqueuse d'un ou plusieurs sels d'un métal M ou M' choisis dans le groupe constitué par le magnésium (Mg), le cuivre (Cu), le cobalt (Co), le nickel (Ni), l'étain (Sn), le zinc (Zn), le lithium (Li), le calcium (Ca), le césium (Cs), le sodium (Na), le potassium K, le fer (Fe) et le manganèse (Mn), de préférence le cobalt, le nickel, le magnésium, le calcium et le zinc et de manière très préférée le cobalt et le nickel, et de manière particulièrement préférée le cobalt, suivie d'un séchage à une température comprise entre 60°C et 200°C et d'une calcination à une température comprise entre 700 et 1200°C.

Le métal M ou M' est mis au contact du support par l'intermédiaire de tout précurseur métallique soluble en phase aqueuse. De manière préférée, lorsque le métal M ou M' appartient au groupe VIIIB, alors le précurseur du métal du groupe VIIIB est introduit en solution aqueuse, de préférence sous forme de nitrate, de carbonate, d'acétate, de chlorure, d'oxalate, de complexes formés par un polyacide ou un acide-alcool et ses sels, de complexes formés avec les acétylacétonates, ou de tout autre dérivé inorganique soluble en solution aqueuse, laquelle est mise en contact avec ledit support. Dans le cas préféré où le métal M est le cobalt, le précurseur de cobalt avantageusement utilisé est le nitrate de cobalt, l'oxalate de cobalt ou l'acétate de cobalt.

La teneur en métal M ou M' est avantageusement comprise entre 1 et 20 % poids et de préférence entre 2 et 10 % poids par rapport à la masse totale du support final.

Le séchage est avantageusement effectué à une température comprise entre 60°C et 200°C, de préférence pendant une durée allant de 30 minutes à trois heures.

La calcination est effectuée à une température comprise entre 700 et 1200°C, de préférence comprise entre 850 et 1200°C, et de manière préférée comprise entre 850 et 900°C, généralement pendant une durée comprise entre une heure et 24 heures et de préférence comprise entre 2 heures et 5 heures. La calcination est généralement effectuée sous atmosphère oxydante, par exemple sous air, ou sous air appauvri en oxygène ; elle peut également être effectuée au moins en partie sous azote. Elle permet de transformer les précurseurs M et M' et l'alumine en structure de type spinelle (aluminate de M et M').

Par calcination à très haute température, la phase spinelle simple MAl₂O₄ ou mixte MₓM'₍₁₋ₓ₎Al₂O₄ formée stabilise l'ensemble du support. Les métaux M et M' contenus dans la phase spinelle ne sont pas réductibles lors de l'activation finale du catalyseur Fischer-Tropsch (réduction). Le métal M ou M' contenus dans la phase spinelle simple MAl₂O₄ ou mixte MₓM'₍₁₋ₓ₎Al₂O₄ ne constitue donc pas la phase active du catalyseur.

Selon une variante, la calcination peut également être effectuée en deux étapes, ladite calcination étant avantageusement réalisée à une température comprise entre 300°C et 600°C sous air pendant une durée comprise entre une demi-heure et trois heures, puis à une température comprise entre 700°C et 1200°C, de préférence comprise entre 850 et 1200°C et de manière préférée entre 850 et 900°C, généralement pendant une durée comprise entre une heure et 24 heures, et de préférence comprise entre 2 heures et 5 heures.

Ainsi, à l'issue de ladite étape a2), ledit support contenant de l'alumine et de la silice contient en outre au moins une phase spinelle simple MAl₂O₄ ou mixte MₓM'₍₁₋ₓ₎Al₂O₄ partielle ou non, dans laquelle les métaux M et M' sont sous forme d'aluminates.

### Etape b)

Tout composé organique contenant de l'oxygène et/ou de l'azote mais ne comprenant pas de soufre qui est à l'état liquide à la température et à la pression mises en oeuvre à l'étape d'addition du composé organique sur le support poreux peut être utilisé dans le procédé de préparation du catalyseur.

De préférence, ledit composé organique est choisi parmi un composé comportant une ou plusieurs fonctions chimiques choisies parmi une fonction carboxylique, alcool, ester, amine, amide, éther, dilactone, carboxyanhydride, aldéhyde, cétone, nitrile, imide, oxime, urée.

Lorsque ledit composé organique comporte au moins une ou plusieurs fonctions carboxyliques, ledit composé organique peut être choisi parmi l'acide éthanedioïque (acide oxalique), l'acide propanedioïque (acide malonique), l'acide butanedioïque (acide succinique), l'acide 4-oxopentanoïque (acide lévulinique) et l'acide 3-carboxy-3-hydroxypentanedioïque (acide citrique).

Lorsque ledit composé organique comporte au moins une ou plusieurs fonctions alcools, ledit composé organique peut être choisi parmi le méthanol, l'éthanol, le phénol, l'éthylène glycol, le propane-1,3-diol, le glycérol, le sorbitol, le diéthylène glycol, les polyéthylène glycol ayant une masse molaire moyenne inférieure à 600 g/mol, le glucose, le fructose et le sucrose sous l'une quelconque de leurs formes isomères.

Lorsque ledit composé organique comporte au moins une ou plusieurs fonctions esters, ledit composé organique peut être choisi parmi une γ-lactone ou une δ-lactone contenant entre 4 et 8 atomes de carbone, la γ-butyrolactone, la γ-valérolactone, le laurate de méthyle, le malonate de diméthyle, le succinate de diméthyle et le carbonate de propylène.

Lorsque le composé organique comporte au moins une ou plusieurs fonction amine, ledit composé organique peut être choisi parmi l'aniline, l'éthylènediamine, le diaminohexane, la tétraméthylènediamine, l'hexaméthylènediamine, la tétraméthyléthylènediamine, la tétraéthyléthylènediamine, la diéthylènetriamine et la triéthylènetétramine.

Lorsque le composé organique comporte au moins une ou plusieurs fonctions amides, ledit composé organique peut être choisi parmi la formamide, la N-méthylformamide, la N,N-diméthylformamide, la 2-pyrrolidone, la N-méthyl-2-pyrrolidone, la gamma-valérolactame et la N,N'-diméthylurée.

Lorsque le composé organique comporte au moins une ou plusieurs fonctions éthers, ledit composé organique peut être choisi parmi les composés organiques comprenant au maximum deux fonctions éthers et ne comportant pas de groupe hydroxyle, choisi dans le groupe des éthers linéaires constitué par le diéthyl éther, le dipropyl éther, le dibutyl éther, le methyl tert-butyl éther, le diisopropyl éther, le di-tert-butyl éther, le méthoxybenzène, le phényl vinyl éther, l'isopropyl vinyl éther et l'isobutyl vinyl éther, ou dans le groupe des éthers cycliques constitué par le tétrahydrofurane, 1,4-dioxane et la morpholine

Lorsque le composé organique comporte une fonction dilactone, ledit composé organique peut être choisi dans le groupe des dilactones cycliques de 4 chaînons constitué par la 1,2-dioxétanedione, ou dans le groupe des dilactones cycliques de 5 chaînons constitué par la 1,3-dioxolane-4,5-dione, la 1,5-dioxolane-2,4-dione, et la 2,2-dibutyl-1,5-dioxolane-2,4-dione, ou dans le groupe des dilactones cycliques de 6 chaînons constitué par la 1,3-dioxane-4,6-dione, la 2,2-diméthyl-1,3-dioxane-4,6-dione, la 2,2,5-triméthyl-1,3-dioxane-4,6-dione, la 1,4-dioxane-2,5-dione, la 3,6-diméthyl-1,4-dioxane-2,5-dione, la 3,6-diisopropyl-1,4-dioxane-2,5-dione, et la 3,3-ditoluyl-6,6-diphényl-1,4-dioxane-2,5-dione, ou dans le groupe des dilactones cycliques de 7 chaînons constitué par la 1,2-dioxépane-3,7-dione, la 1,4-dioxépane-5,7-dione, la 1,3-dioxépane-4,7-dione et la 5-hydroxy-2,2-diméthyl-1,3-dioxépane-4,7-dione. Lorsque le composé organique comporte une fonction carboxyanhydride, ledit composé organique peut être choisi dans le groupe des O-carboxyanhydrides constitué par la 5-méthyl-1,3-dioxolane-2,4-dione et l'acide 2,5-dioxo-1,3-dioxolane-4-propanoïque, ou dans le groupe des N-carboxyanhydrides constitué par la 2,5-oxazolidinedione et la 3,4-diméthyl-2,5-oxazolidinedione. On entend par carboxyanhydride un composé organique cyclique comportant une fonction carboxyanhydride, c'est-à-dire un enchaînement -CO-O-CO-X- ou -X-CO-O-CO- au sein du cycle avec -CO- correspondant à une fonction carbonyle et X pouvant être un atome d'oxygène ou d'azote. Pour X = O on parle d'*O*-carboxyanhydride et quand X = N on parle de *N*-carboxyanhydride.

L'addition du composé organique sur le support poreux peut être réalisé par deux variantes de réalisation décrites en détail ci-après.

### Variante 1

Selon un premier mode de réalisation selon l'invention, le procédé de synthèse Fischer-Tropsch est réalisé en présence d'un catalyseur obtenu par un procédé de préparation dans lequel l'étape b) est réalisée par mise en présence simultanée dudit support poreux et dudit composé organique à l'état liquide, et sans contact physique, à une température inférieure à la température d'ébullition dudit composé organique et dans des conditions de pression et de durée telles qu'une fraction dudit composé organique est transférée à l'état gazeux au support poreux.

Dans ce mode de réalisation, le procédé d'addition du composé organique ne fait pas intervenir d'étape classique d'imprégnation au moyen d'une solution contenant un solvant dans lequel est dilué le composé organique. Par conséquent, il n'est pas nécessaire de procéder à une étape de séchage du support poreux en vue d'éliminer le solvant, d'où un procédé plus économique en termes d'utilité chaude et de matière première. De plus, selon ce mode de réalisation, l'étape d'addition du composé organique est conduite à une température inférieure à la température d'ébullition dudit composé organique, d'où un gain substantiel du point de vue énergétique et en termes de sécurité. En effet, pour de nombreux composés organiques, comme par exemple l'éthylène glycol cité dans ce document, le point d'inflammation est inférieur au point d'ébullition. Il y a donc un risque d'incendie à travailler à une température supérieure à la température d'ébullition du composé organique. De plus, une température élevée peut aussi conduire à une décomposition partielle ou totale du composé organique réduisant fortement son effet. Par exemple, l'acide citrique, couramment utilisé comme additif organique (US2009/0321320) se décomposé à 175°C alors que son point d'ébullition est de 368°C à pression atmosphérique. Le procédé de préparation selon cette variante se caractérise également par le fait que l'addition du composé organique sur le support poreux est réalisée sans contact physique avec le composé organique à l'état liquide, c'est-à-dire sans imprégnation du support poreux par le liquide. Le procédé repose sur le principe de l'existence d'une pression de vapeur du composé organique qui est générée par sa phase liquide à une température et à une pression données. Ainsi une partie des molécules de composé organique à l'état liquide passe à l'état gazeux (vaporisation) et est alors transférée (par voie gazeuse) au support poreux. Cette étape b) de mise en présence est réalisée pendant une durée suffisante pour atteindre la teneur ciblée en composé organique dans le solide poreux qui est utilisé en tant que support de catalyseur.

Dans ce mode de réalisation, l'étape d'addition du composé organique à un support poreux peut être réalisé dans une unité d'addition dudit composé organique. L'unité d'addition mise en oeuvre comprend un premier et un second compartiments en communication de manière à autoriser le passage d'un fluide gazeux entre les deux compartiments, le premier compartiment étant apte à contenir le support poreux et le second compartiment étant apte à contenir le composé organique sous forme liquide. Dans ce mode de réalisation, le procédé comprend une étape b) dans laquelle on met en présence le support poreux et le composé organique sous forme liquide sans contact physique entre le support poreux et le composé organique sous forme liquide, à une température inférieure à la température d'ébullition du composé organique et dans des conditions de pression et de durée telles qu'une fraction dudit composé organique est transférée par voie gazeuse au solide poreux par circulation d'un flux de composé organique sous forme gazeuse du second compartiment dans le premier compartiment, de manière à fournir *in fine* un support poreux contenant le composé organique.

Selon un mode de réalisation, l'unité d'addition comprend une enceinte incluant les premier et second compartiments, les compartiments étant en communication par voie gazeuse. Par exemple les compartiments sont disposés côte à côté et séparés par une cloison, par exemple sensiblement verticale, solidaire du fond de l'enceinte et ne s'étendant que sur une fraction de la hauteur de l'enceinte de manière à laisser diffuser le ciel gazeux d'un compartiment à l'autre. Alternativement, les compartiments sont disposés l'un au-dessus de l'autre et sont en communication de manière à permettre le passage du composé organique à l'état gazeux entre les deux compartiments. De préférence l'enceinte est fermée.

Selon un autre mode de réalisation, l'unité d'addition comprend deux enceintes formant respectivement le premier et le second compartiments, les deux enceintes étant en communication par voie gazeuse, par exemple au moyen d'une conduite. De préférence, les deux enceintes sont fermées.

De préférence, le compartiment destiné à contenir le composé organique liquide comprend des moyens pour mettre en mouvement ledit liquide afin de faciliter le transfert du composé organique à l'état gazeux d'un compartiment à l'autre. Selon un mode de réalisation préféré, les deux compartiments comprennent des moyens pour mettre en mouvement respectivement le liquide et le support poreux. Avantageusement le compartiment contenant le composé organique à l'état liquide est équipé d'internes destinés à maximiser la surface de l'interface gaz/liquide. Ces internes sont par exemple des monolithes poreux imprégnés par capillarités, des films tombants, des garnissages ou tout autre moyen connu de l'Homme du métier.

Dans un mode de réalisation préféré, l'étape b) est réalisée en présence d'un gaz « vecteur » circulant du second compartiment dans le premier compartiment de manière à entrainer les molécules organiques à l'état gazeux dans le compartiment contenant le support poreux. Par exemple le gaz vecteur peut être choisi parmi le dioxyde de carbone, l'ammoniac, l'air à hygrométrie contrôlée, un gaz rare comme l'argon, l'azote, l'hydrogène, du gaz naturel ou un gaz réfrigérant au titre de la classification éditée par l'IUPAC.

Selon un mode de réalisation préféré, l'étape b) comprend une étape dans laquelle on soutire du premier compartiment un effluent gazeux contenant ledit composé organique et on recycle l'effluent dans le premier et/ou le second compartiment.

Selon un autre mode de réalisation, on soutire du premier compartiment un effluent gazeux contenant ledit composé organique à l'état gazeux, on condense ledit effluent de manière à récupérer une fraction liquide contenant le composé organique à l'état liquide et on recycle ladite fraction liquide dans le second compartiment.

L'étape b) est réalisée de préférence à une pression absolue comprise entre 0,1 et 1 MPa. Comme précisé plus haut, la température de l'étape b) est fixée à une température inférieure à la température d'ébullition du composé organique. La température de l'étape b) est généralement inférieure à 200°C, de préférence comprise entre 10°C et 150°C, de manière plus préférée comprise entre 25°C et 120°C.

### Variante 2

Selon un second mode de réalisation selon l'invention, le procédé de synthèse Fischer-Tropsch est réalisé en présence d'un catalyseur obtenu par un procédé de préparation dans lequel l'étape b) est réalisée par mise en présence dudit support poreux avec un solide poreux (appelé aussi ici « solide vecteur ») comprenant ledit composé organique, de préférence le solide vecteur étant différent du support poreux servant de support du catalyseur final, dans des conditions de température, de pression et de durée telles qu'une fraction dudit composé organique est transférée par voie gazeuse dudit solide vecteur audit support poreux.

L'objectif de cette mise en présence du support poreux et du solide vecteur comprenant le composé organique est de permettre un transfert gazeux d'une partie du composé organique contenu dans le solide vecteur vers le support poreux. Cette étape repose sur le principe de l'existence d'une pression de vapeur du composé organique à une température et une pression données. Ainsi une partie des molécules de composé organique du solide vecteur comprenant le composé organique passe sous forme gazeuse (vaporisation) et est alors transférée (par voie gazeuse) au support poreux. Selon ce mode de réalisation, le solide poreux (« solide vecteur ») joue le rôle de source en composé organique pour enrichir en composé organique le support poreux, qui de préférence ne comprend pas initialement de composé organique. Ce mode de réalisation est donc différent d'une simple étape de maturation telle que classiquement rencontrée dans l'art antérieur. En effet, la diffusion du composé organique du solide vecteur vers le support poreux est réalisée de manière inter-granulaire, contrairement à une maturation classique pour laquelle la diffusion du composé organique est réalisée de manière intragranulaire. Un telle définition de la maturation est illustrée dans la thèse de Jonathan Moreau ; Rationalisation de l'étape d'imprégnation de catalyseurs à base d'hétéropolyanions de molybdène supportés sur alumine » ; page 56 ; Université Claude Bernard - Lyon I, 2012.

De plus, le recours à une telle étape de mise en contact, i.e. par transfert gazeux, entre le solide poreux comprenant le composé organique et le support poreux permet d'économiser une étape de séchage qui aurait classiquement lieu après une étape d'imprégnation du composé organique dilué dans un solvant sur le support poreux (suivi éventuellement d'une étape de maturation) afin d'éliminer le solvant utilisé. En effet, dans ce mode de réalisation, le solide poreux (« solide vecteur ») comprenant le composé organique est obtenu par imprégnation avec le composé organique à l'état liquide. Contrairement à l'art antérieur, le composé organique n'est pas dilué dans un solvant. Un avantage de ce mode de réalisation par rapport aux procédés de l'art antérieur réside donc en l'absence d'étape de séchage qui est classiquement utilisée pour éliminer le solvant après l'étape d'imprégnation et donc d'être moins énergivore par rapport aux procédés classiques. Cette absence d'étape de séchage permet d'éviter d'éventuelles pertes en composé organique par vaporisation voire par dégradation.

Le volume de composé organique mis en oeuvre est strictement inférieur au volume total de la porosité accessible du solide poreux et du support poreux mis en oeuvre à l'étape b) et est fixé par rapport à la quantité en composé organique visée sur le solide poreux à l'issue de l'étape b). Un autre avantage de ce mode de réalisation est donc l'utilisation d'une quantité plus réduite de composé organique par rapport au cas de l'art antérieur où, en absence de solvant, toute la porosité devrait être remplie de composé organique.

Le ratio massique (solide poreux comprenant le composé organique) / (support poreux) est fonction de la distribution poreuse du solide poreux et du support poreux et de l'objectif en terme de quantité visée en composé organique sur le support poreux. Ce ratio massique est généralement inférieur ou égal à 10, de préférence inférieur à 2 et de manière encore plus préférée compris entre 0,05 et 1, bornes comprises.

Dans ce mode de réalisation, l'étape b) est conduite dans des conditions de température, de pression et de durée de manière à atteindre un équilibrage de la quantité en composé organique sur le solide poreux (« solide vecteur ») et le support poreux. On entend par le terme "équilibrage" désigner le fait qu'à l'issue de l'étape b) au moins 50% poids du solide poreux et du support poreux présentent une quantité en ledit composé organique égale à plus ou moins 50% de la quantité ciblée, de manière préférée au moins 80% poids du solide poreux et du support poreux présentent une quantité en ledit composé organique égale à plus ou moins 40% de la quantité ciblée et encore plus préférentiellement au moins 90% poids du solide poreux et du support poreux présentent une quantité en ledit composé organique égale à plus ou moins 20% de la quantité ciblée.

A titre d'exemple non limitatif, dans le cas où l'on vise la préparation d'un support poreux comportant 5% poids de composé organique, on peut mettre en présence dans une même quantité un solide poreux contenant 10% poids de composé organique avec le support poreux exempt dudit composé organique. On considérera dans ce cas que l'équilibrage est atteint lorsqu'au moins 50% poids du solide poreux et du support poreux ont une quantité en ledit composé organique qui correspond à une teneur comprise entre 2,5 et 7,5% poids, préférentiellement lorsqu'au moins 80% poids du solide poreux et du support poreux ont une quantité en ledit composé organique qui correspond à une teneur qui est comprise entre 3 et 7% poids, et encore plus préférentiellement, lorsqu'au moins 90% poids du solide poreux et du support poreux présentent une quantité en ledit composé organique qui correspond à une teneur comprise entre 4 et 6% poids.

La détermination de ces teneurs peut se faire par un échantillonnage statistiquement représentatif pour lequel les échantillons peuvent être caractérisés par exemple par dosage du carbone et/ou d'éventuels hétéroatomes contenus dans le composé organique ou par thermogravimétrie couplée à un analyseur, par exemple un spectromètre de masse, ou un spectromètre Infra-Rouge et ainsi déterminer les teneurs respectives en composés organiques.

L'étape b) est de préférence menée dans des conditions de température et de pression contrôlées et de sorte que la température soit inférieure à la température d'ébullition dudit composé organique à transférer par voie gazeuse.

De préférence, la température de mise en oeuvre est inférieure à 150°C et la pression absolue est généralement comprise entre 0,1 et 1 MPa, de préférence entre 0 et 0,5 MPa et de manière plus préférée comprise entre 0,1 et 0,2 MPa. On pourra ainsi opérer l'étape de mise en présence dans une enceinte ouverte ou fermée, avec éventuellement un contrôle de la composition du gaz présent dans l'enceinte.

Lorsque l'étape de mise en présence du solide poreux et du support poreux se fait dans une enceinte ouverte, on s'assurera que l'entrainement du composé organique hors de l'enceinte soit limité autant que possible. Alternativement l'étape de mise en présence du solide poreux et du support poreux peut être réalisée dans une enceinte fermée par exemple dans un container de stockage ou de transport du solide étanche aux échanges gazeux avec le milieu extérieur. Dans ce mode de réalisation, l'étape de mise en présence peut se faire en contrôlant la composition du gaz composant l'atmosphère par l'introduction d'un ou plusieurs composés gazeux et éventuellement avec une hygrométrie contrôlée. A titre d'exemple non limitatif, le composé gazeux peut être le dioxyde de carbone, l'ammoniac, l'air à hygrométrie contrôlée, un gaz rare comme l'argon, l'azote, l'hydrogène, du gaz naturel ou un gaz réfrigérant au titre de la classification éditée par l'IUPAC. Selon un mode de réalisation avantageux, l'étape de mise en présence sous atmosphère gazeuse contrôlée met en oeuvre une circulation forcée du gaz dans l'enceinte.

Dans un mode de réalisation de cette variante de réalisation, l'étape de mise en présence du solide poreux et du support poreux se fait sans contact physique, dans une enceinte équipée de compartiments aptes à contenir respectivement le solide poreux (« solide vecteur ») et le support poreux, les compartiments étant en communication de manière à autoriser le passage du composé organique à l'état gazeux entre les deux compartiments. Il est avantageux de faire circuler un flux gazeux d'abord au travers du compartiment contenant le solide poreux comprenant le composé organique puis au travers du compartiment contenant le support poreux.

De préférence, le solide poreux (solide vecteur) est de nature différente du solide poreux (servant de support de catalyseur), c'est-à-dire que le solide poreux a au moins une caractéristique physique discriminante vis-à-vis du support poreux afin de permettre par exemple leur séparation ultérieure. Par exemple et de manière non limitative, cette caractéristique physique peut être :
- la taille des particules du solide : la séparation peut être effectuée sur un tamis ;
- le magnétisme : la séparation se fait par l'application d'un champ magnétique ;
- la densité du solide : en conjonction ou pas avec la taille des particules, cette différence de densité peut par exemple être utilisée pour une séparation par élutriation.

Par ailleurs, ledit support poreux et ledit solide poreux contenant le composé organique peuvent être avantageusement de porosité et/ou de nature chimique différente(s). En effet, le solide poreux peut être de composition chimique adaptée pour défavoriser l'adsorption du composé à imprégner par rapport à l'adsorption du composé à imprégner sur le support poreux. Un effet similaire peut être obtenu en adaptant la structure poreuse du solide poreux de sorte qu'il présente une ouverture moyenne de ses pores qui soit supérieure à celle du support poreux de sorte à favoriser le transfert du composé organique sur le support poreux, particulièrement dans le cas d'une condensation capillaire.

Un mode de réalisation de l'étape b) de mise en présence du composé organique et du support poreux est schématisé à la figure 1. Ce mode de réalisation selon l'invention correspond au cas où le solide poreux contenant le composé organique sert de réservoir en composé organique pour le support poreux. Comme indiqué sur la figure 1, un solide poreux dit "vecteur" **1** est imprégné dans une unité d'imprégnation **2** avec un composé organique liquide apporté par la ligne **3.** Le solide vecteur **4** comprenant le composé organique est transféré dans l'unité d'addition **5** dans laquelle ledit solide vecteur est mis en présence du support poreux amené par la ligne **6.** A l'issue de l'étape de mise en présence du solide poreux et du support poreux, on soutire de l'unité par la ligne **7**, un mélange de support poreux et solide poreux (solide vecteur) contenant chacun ledit composé organique. Le mélange de solides (support poreux et solide poreux) est ensuite envoyé à une unité de séparation **8** qui réalise une séparation physique des solides (solide poreux et support poreux). Grâce à la mise en oeuvre de la séparation on obtient deux flux de solides à savoir le solide poreux **9** contenant le composé organique et le support poreux **10** contenant également du composé organique. Conformément à ce mode de réalisation, le solide poreux contenant encore le composé organique **9** est recyclé à l'unité d'introduction du composé organique liquide en vue d'une utilisation ultérieure.

### Etape c)

L'étape c) de mise en contact dudit support poreux avec au moins une solution contenant au moins un sel de précurseur de la phase comprenant au moins un métal du groupe VIII peut être réalisée par imprégnation, à sec ou en excès, selon des méthodes bien connues de l'Homme du métier. Ladite étape c) est préférentiellement réalisée par mise en contact du support poreux avec au moins une solution, aqueuse ou organique (par exemple le méthanol ou l'éthanol ou le phénol ou l'acétone ou le toluène ou le diméthylsulfoxyde (DMSO)) ou bien constituée d'un mélange d'eau et d'au moins un solvant organique, contenant au moins un précurseur de la phase active comprenant au moins un métal du groupe VIII au moins partiellement à l'état dissous, ou encore en la mise en contact d'un précurseur de la phase active avec au moins une solution colloïdale d'au moins un précurseur de métal du groupe VIII, sous forme oxydée (nanoparticules d'oxydes, d'oxy(hydroxyde) ou d'hydroxyde du cobalt) ou sous forme réduite (nanoparticules métalliques du métal du groupe VIII à l'état réduit). De préférence, la solution est aqueuse. Le pH de cette solution peut être modifié par l'ajout éventuel d'un acide ou d'une base. Selon une autre variante préférée, la solution aqueuse peut contenir de l'ammoniaque ou des ions ammonium NH₄⁺.

De manière préférée, ladite étape c) est réalisée par imprégnation à sec, laquelle consiste à mettre en contact le support poreux avec au moins une solution, contenant au moins un précurseur de la phase active comprenant au moins un métal du groupe VIII, dont le volume de la solution est compris entre 0,25 et 1,5 fois le volume poreux du support du précurseur de catalyseur à imprégner.

De préférence, le métal du groupe VIII est choisi parmi le fer ou le cobalt. Plus préférentiellement, le métal du groupe VIII est le cobalt.

Lorsque le précurseur de la phase active est introduit en solution aqueuse et lorsque le métal du groupe VIII est le cobalt, on utilise avantageusement un précurseur de cobalt sous forme de nitrate, de carbonate, de chlorure, de sulfate, d'hydroxyde, d'hydroxycarbonate, de formiate, d'acétate, d'oxalate, de complexes formés avec les acétylacétonates ou de tout autre dérivé inorganique soluble en solution aqueuse, laquelle est mise en contact avec ledit précurseur de catalyseur. On utilise avantageusement comme précurseur de cobalt, le nitrate de cobalt, le carbonate de cobalt, le chlorure de cobalt, l'hydroxyde de cobalt, le hydroxycarbonate de cobalt. De manière très préférée, le précurseur de cobalt est le nitrate de cobalt.

Les quantités du ou des précurseurs de cobalt introduites dans la solution sont choisies de telle manière que la teneur en élément cobalt est comprise entre 2 % et 40 % poids, de préférence entre 5 % et 30 % poids, et de manière plus préférée entre 10 % et 25 % poids exprimé en élément cobalt métallique par rapport au poids total du catalyseur.

Avantageusement, le rapport molaire entre ledit composé organique introduit à l'étape b) et le métal du groupe VIII introduit à l'étape c) est compris entre 0,01 et 5,0 mol/mol, de préférence entre 0,05 et 2,0 mol/mol, plus préférentiellement entre 0,1 et 1,5 mol/mol et encore plus préférentiellement entre 0,3 et 1,2 mol/mol, par rapport à l'élément du groupe VIII.

### Etape d) Séchage

L'étape de séchage d) est effectuée à une température inférieure à 200°C, avantageusement comprise entre 50°C et 180°C, de préférence entre 70°C et 150°C, de manière très préférée entre 75°C et 130°C. L'étape de séchage est préférentiellement réalisée pendant une durée comprise entre 1 heure et 4 heures.

L'étape de séchage peut être effectuée par toute technique connue de l'Homme du métier. Elle est avantageusement effectuée sous une atmosphère inerte ou sous une atmosphère contenant de l'oxygène ou sous un mélange de gaz inerte et d'oxygène. Elle est avantageusement effectuée à pression atmosphérique ou à pression réduite. De manière préférée, cette étape est réalisée à pression atmosphérique et en présence d'air ou d'azote.

### Etape e) Calcination (optionnelle)

Optionnellement, à l'issue de l'étape d) de séchage, on effectue une étape e) de calcination à une température comprise entre 250°C et 1000°C, de préférence comprise entre 250°C et 750°C, sous une atmosphère inerte ou sous une atmosphère contenant de l'oxygène. La durée de ce traitement thermique est généralement comprise entre 15 minutes et 10 heures. Des durées plus longues ne sont pas exclues, mais n'apportent pas nécessairement d'amélioration. Après ce traitement, le cobalt de la phase active se trouve ainsi sous forme oxyde.

### Caractéristiques du catalyseur

Le catalyseur utilisé dans le cadre du procédé selon l'invention comprend une phase active comprenant au moins un métal du groupe VIII, dont la teneur dudit métal est comprise entre 2 % et 40 % poids, de préférence entre 5 % et 30 % poids, et de manière plus préférée entre 10 % et 25 % poids exprimé en élément métallique par rapport au poids total du catalyseur. De préférence, le métal du groupe VIII est le cobalt. Plus préférentiellement, la phase active est constituée de cobalt.

Le support poreux du catalyseur employé pour la mise en oeuvre du procédé de synthèse d'hydrocarbures selon l'invention est un support d'oxydes contenant de l'alumine, de la silice, et au moins une spinelle telle que décrite ci-dessus.

Le support contenant de l'alumine, de la silice, au moins une spinelle telle que décrite ci-dessus peut être préparé à partir d'alumine quelle que soit sa surface spécifique et la nature de sa répartition poreuse. La surface spécifique de l'alumine à partir de laquelle le support est préparé est généralement comprise entre 50 m²/g et 500 m²/g, de préférence entre 100 m²/g et 300 m²/g, de façon plus préférée entre 150 m²/g et 250 m²/g. Le volume poreux total de l'alumine à partir de laquelle le support est préparé est généralement compris entre 0,4 ml/g et 1,2 ml/g, et de préférence compris entre 0,45 ml/g et 1 ml/g.

La distribution poreuse des pores dans l'alumine à partir de laquelle le support est préparé peut être de type monomodale, bimodale ou plurimodale. De préférence, elle est de type monomodale. La taille de pores est de l'ordre de 2 à 50 nm, avec une taille moyenne des pores entre 5 et 25 nm, de préférence entre 8 et 20 nm.

Les caractéristiques de l'alumine mentionnées ci-dessus correspondent aux caractéristiques de l'alumine à partir de laquelle le support est préparé, c'est-à-dire avant l'introduction de la silice, des métaux M et éventuellement M' pour la formation de la phase spinelle et de la phase active.

La teneur en silice dans le support varie de 0,5% poids à 30% poids, de manière préférée de 1% poids à 25% poids, et de manière encore plus préférée de 1,5 à 20% poids par rapport au poids du support.

On entend par un support contenant de l'alumine et de la silice un support dans lequel le silicium et l'aluminium sont sous forme d'agglomérats de silice ou d'alumine respectivement, d'aluminosilicate amorphe ou toute autre phase mixte contenant du silicium et de l'aluminium. De préférence, l'alumine et la silice sont présents sous forme de mélange d'oxydes SiO₂-Al₂O₃ dénommée silice-alumine. On entend par silice-alumine une alumine comprenant un pourcentage de silice strictement supérieur à 10% poids allant jusqu'à 30% poids par rapport au poids du support. Ladite silice-alumine est homogène à l'échelle du micromètre, et de manière encore plus préférée, homogène à l'échelle du nanomètre.
La phase spinelle présente dans le support d'oxydes est une phase spinelle simple MAl₂O₄ ou mixte MₓM'₍₁₋ₓ₎Al₂O₄ partielle ou non, où M et M' sont des métaux distincts choisis dans le groupe constitué par le magnésium (Mg), le cuivre (Cu), le cobalt (Co), le nickel (Ni), l'étain (Sn), le zinc (Zn), le lithium (Li), le calcium (Ca), le césium (Cs), le sodium (Na), le potassium (K), le fer (Fe) et le manganèse (Mn) et où x est compris entre 0 et 1, les valeurs 0 et 1 étant elles-mêmes exclues.

L'utilisation de phases de structures spinelles du type MAl₂O₄ ou spinelles mixtes MₓM'_{(1- x})Al₂O₄ a été décrite dans les documents FR2879478 et WO 2005/072866, M et M' étant généralement des métaux divalents tels que Mg, Sn, Ni, Co, Cu. On peut également citer les publications de Rotan et coll. dans Journal of the European Ceramic Society 33 (2013) 1-6 et Rytter et coll. dans Top. Catal. 54 (2011) 801-810. Dans ce cas, le métal divalent (notamment le nickel) est introduit sous forme d'un précurseur de type nitrate par exemple à hauteur de quelques pourcents sur le support initial contenant de l'alumine. Par calcination à très haute température, la phase spinelle est formée et stabilise l'ensemble du support.

De manière très préférée, M est le cobalt ou le nickel dans le cas d'un spinelle simple. De manière très préférée, M est le cobalt et M' est le magnésium ou le zinc dans le cas d'un spinelle mixte.

De manière particulièrement préférée, la phase spinelle est un spinelle simple MAl₂O₄ dans laquelle M est le cobalt.

La teneur de la phase spinelle est généralement entre 3 et 50 % poids, et de manière préférée entre 5 et 40 % poids par rapport au poids du support.

La teneur en métal M ou M' est comprise entre 1 et 20 % poids, et de manière préférée entre 2 et 10 % poids par rapport au poids du support.

La formation de la structure spinelle simple ou mixte dans ledit support, souvent appelé étape de stabilisation du support, peut être effectuée par toute méthode connue de l'Homme du métier. Elle est généralement effectuée en introduisant le métal M ou M' sous forme d'un précurseur de sel par exemple de type nitrate sur le support initial contenant l'alumine. Par calcination à très haute température, la phase spinelle, dans laquelle le métal M ou M' sont sous forme d'aluminate, est formée et stabilise l'ensemble du support.

La présence de phase spinelle dans le catalyseur utilisé dans le procédé Fischer-Tropsch selon l'invention se mesure par réduction en température programmée RTP (ou TPR pour "temperature programmed réduction" selon la terminologie anglo-saxonne) tel que par exemple décrit dans Oil & Gas Science and Technology, Rev. IFP, Vol. 64 (2009), No. 1, pp. 11-12. Selon cette technique, le catalyseur est chauffé sous flux d'un réducteur, par exemple sous flux de dihydrogène. La mesure du dihydrogène consommé en fonction de la température donne des informations quantitatives sur la réductibilité des espèces présentes. La présence d'une phase spinelle dans le catalyseur se manifeste ainsi par une consommation de dihydrogène à une température supérieure à environ 800°C.

De préférence, le support d'oxydes contenant de l'alumine, de la silice, au moins une spinelle telle que décrite ci-dessus est une silice-alumine dans laquelle la spinelle est incluse, ledit support ayant de préférence une teneur en silice entre 0,5% poids à 30% poids par rapport au poids du support, ledit support contenant en plus au moins une spinelle telle que décrite ci-dessus. De préférence, la teneur en silice est supérieure à 10% poids allant jusqu'à 30% poids par rapport au poids du support, ledit support contenant en outre au moins une spinelle telle que décrite ci-dessus.

La surface spécifique du support d'oxydes contenant de l'alumine, de la silice, et au moins une spinelle telle que décrite ci-dessus est généralement comprise entre 50 m²/g et 500 m²/g, de préférence entre 100 m²/g et 300 m²/g, de façon plus préférée entre 150 m²/g et 250 m²/g. Le volume poreux dudit support est généralement compris entre 0,3 ml/g et 1,2 ml/g, et de préférence compris entre 0,4 ml/g et 1 ml/g.

Le support sur lequel est déposée ladite phase active peut présenter une morphologie sous forme de billes, d'extrudés (par exemple de forme trilobes ou quadrilobes) ou de pastilles, notamment lorsque ledit catalyseur est mis en oeuvre dans un réacteur fonctionnant en lit fixe, ou présenter une morphologie sous forme de poudre de granulométrie variable, notamment lorsque ledit catalyseur est mis en oeuvre dans un réacteur de type colonne à bulles.

La surface spécifique du catalyseur contenant la phase active et le support d'oxydes contenant de l'alumine, de la silice, et au moins un spinelle telle que décrite ci-dessus est généralement comprise entre 50 m²/g et 500 m²/g, de préférence entre 80 m²/g et 250 m²/g, de façon plus préférée entre 90 m²/g et 150 m²/g. Le volume poreux dudit catalyseur est généralement compris entre 0,2 ml/g et 1 ml/g, et de préférence compris entre 0,25 ml/g et 0,8 ml/g. De préférence, la distribution poreuse est monomodale.

De manière préférée, le catalyseur contient une phase active comprenant du cobalt, et un support en silice-alumine dans laquelle un spinelle est incluse, la teneur en silice du support étant de préférence entre 1,5 et 20 % poids par rapport au poids du support, ladite phase spinelle étant une spinelle simple MAl₂O₄ ou mixte MₓM'₍₁₋ₓ₎Al₂O₄ partielle ou non, où M et M' sont des métaux distincts choisis dans le groupe constitué par le magnésium (Mg), le cuivre (Cu), le cobalt (Co), le nickel (Ni), l'étain (Sn), le zinc (Zn), le lithium (Li), le calcium (Ca), le césium (Cs), le sodium (Na), le potassium (K), le fer (Fe) et le manganèse (Mn) et où x est compris entre 0 et 1, les valeurs 0 et 1 étant elles-mêmes exclues.

De manière particulièrement préférée, le catalyseur employé pour la mise en oeuvre du procédé Fischer-Tropsch selon l'invention est un catalyseur dans lequel la phase active est constituée de cobalt, et éventuellement du platine, et le support d'oxydes est constitué d'une silice-alumine dans laquelle ladite phase spinelle est incluse, la teneur en silice du support est comprise entre 1,5 % et 20% poids par rapport au poids du support, ladite phase spinelle étant du CoAl₂O₄.

### Description du procédé de synthèse Fischer-Tropsch

Préalablement à son utilisation dans le réacteur catalytique et la mise en oeuvre du procédé Fischer-Tropsch selon l'invention, le catalyseur séché obtenu à l'étape d) ou le catalyseur calciné obtenu à l'étape e) subit avantageusement un traitement réducteur, par exemple avec de l'hydrogène, pur ou dilué, à haute température. Ce traitement permet d'activer ledit catalyseur et de former des particules de cobalt métallique à l'état zéro valent. La température de ce traitement réducteur est préférentiellement comprise entre 200°C et 500°C et sa durée est comprise entre 2 heures et 20 heures.

Ce traitement réducteur est effectué soit in-situ (dans le même réacteur que celui où est opérée la réaction de Fischer-Tropsch selon le procédé de l'invention), soit ex-situ avant d'être chargé dans le réacteur.

Le procédé de Fischer-Tropsch selon l'invention conduit à la production d'hydrocarbures essentiellement linéaires et saturés C₅⁺ (ayant au moins 5 atomes de carbone par molécule). Les hydrocarbures produits par le procédé de l'invention sont ainsi des hydrocarbures essentiellement paraffiniques, dont la fraction présentant les points d'ébullition les plus élevés peut être convertie avec un rendement élevé en distillats moyens (coupes gasoil et kérosène) par un procédé d'hydroconversion tel que l'hydrocraquage et/ou l'hydroisomérisation catalytique(s).

La charge employée pour la mise en oeuvre du procédé de l'invention comprend du gaz de synthèse. Le gaz de synthèse est un mélange comprenant notamment du monoxyde de carbone et d'hydrogène présentant des rapports molaires H₂/CO pouvant varier dans un rapport de 0,5 à 4 en fonction du procédé par lequel il a été obtenu. Le rapport molaire H₂/CO du gaz de synthèse est généralement voisin de 3 lorsque le gaz de synthèse est obtenu à partir du procédé de vaporeformage d'hydrocarbures ou d'alcool. Le rapport molaire H₂/CO du gaz de synthèse est de l'ordre de 1,5 à 2 lorsque le gaz de synthèse est obtenu à partir d'un procédé d'oxydation partielle. Le rapport molaire H₂/CO du gaz de synthèse est généralement voisin de 2,5 lorsqu'il est obtenu à partir d'un procédé de reformage thermique. Le rapport molaire H₂/CO du gaz de synthèse est généralement voisin de 1 lorsqu'il est obtenu à partir d'un procédé de gazéification et de reformage du CO₂.

Le catalyseur utilisé dans le procédé de synthèse d'hydrocarbures selon l'invention peut être mis en oeuvre dans différents types de réacteurs, par exemple en lit fixe, en lit mobile, en lit bouillonnant ou encore en lit fluidisé triphasique. La mise en oeuvre du catalyseur en suspension dans un réacteur fluidisé triphasique, préférentiellement de type colonne à bulle, est préférée. Dans cette mise en oeuvre préférée du catalyseur, ledit catalyseur est divisé à l'état de poudre très fine, particulièrement de l'ordre de quelques dizaines de microns, cette poudre formant une suspension avec le milieu réactionnel. Cette technologie est également connue sous la terminologie de procédé "slurry" par l'homme du métier.

Le procédé de synthèse d'hydrocarbures selon l'invention est opéré sous une pression totale comprise entre 0,1 et 15 MPa, de préférence entre 0,5 et 10 MPa, sous une température comprise entre 150 et 350°C, de préférence entre 180 et 270°C. La vitesse volumique horaire est avantageusement comprise entre 100 et 20000 volumes de gaz de synthèse par volume de catalyseur et par heure (100 à 20000 h⁻¹) et de préférence entre 400 et 10000 volumes de gaz de synthèse par volume de catalyseur et par heure (400 à 10000 h⁻¹).

## Revendications

1. Procédé Fischer-Tropsch de synthèse d'hydrocarbures par mise en contact d'un catalyseur comprenant un support poreux et une phase active comprenant au moins un métal du groupe VIII avec une charge comprenant du gaz de synthèse sous une pression totale comprise entre 0,1 et 15 MPa, sous une température comprise entre 150 et 350°C, et à une vitesse volumique horaire comprise entre 100 et 20000 volumes de gaz de synthèse par volume de catalyseur et par heure avec un rapport molaire H₂/CO du gaz de synthèse compris entre 0,5 et 4, ledit catalyseur étant préparé selon au moins les étapes suivantes :
a) on approvisionne un support poreux contenant de la silice, de l'alumine, et au moins une phase spinelle simple MAl₂O₄ ou mixte MₓM'₍₁₋ₓ₎Al₂O₄ partielle ou non, où M et M' sont des métaux distincts choisis dans le groupe constitué par le magnésium (Mg), le cuivre (Cu), le cobalt (Co), le nickel (Ni), l'étain (Sn), le zinc (Zn), le lithium (Li), le calcium (Ca), le césium (Cs), le sodium (Na), le potassium (K), le fer (Fe) et le manganèse (Mn) et où x est compris entre 0 et 1, les valeurs 0 et 1 étant elles-mêmes exclues ;
b) on additionne au support poreux au moins un composé organique contenant de l'oxygène et/ou de l'azote mais ne comprenant pas de soufre ;
c) on réalise une étape de mise en contact dudit support poreux avec au moins une solution contenant au moins un sel de précurseur de la phase comprenant au moins un métal du groupe VIII ;
d) on sèche le support poreux obtenu à l'issue de l'étape c) ;
**caractérisé en ce que** l'étape b) est réalisée avant ou après les étapes c) et d) et est réalisée par mise en présence dudit support poreux et dudit composé organique dans des conditions de température, de pression et de durée telles qu'une fraction dudit composé organique est transférée à l'état gazeux au support poreux.

2. Procédé selon la revendication 1, dans lequel l'étape b) est réalisée par mise en présence simultanée dudit support poreux et dudit composé organique à l'état liquide et sans contact physique entre ledit support poreux et ledit composé organique à l'état liquide, à une température inférieure à la température d'ébullition dudit composé organique et dans des conditions de pression et de durée telles qu'une fraction dudit composé organique est transférée à l'état gazeux au support poreux.

3. Procédé selon la revendication 2, dans lequel l'étape b) est réalisée au moyen d'une unité d'addition dudit composé organique comprenant un premier et un second compartiments en communication de manière à permettre le passage d'un fluide gazeux entre les compartiments, le premier compartiment contenant le support poreux et le second compartiment contenant le composé organique à l'état liquide.

4. Procédé selon la revendication 3, dans lequel l'unité comprend une enceinte incluant les premier et second compartiments, les deux compartiments étant en communication par voie gazeuse.

5. Procédé selon la revendication 3, dans lequel l'unité comprend deux enceintes formant respectivement le premier et le second compartiments, les deux enceintes étant en communication par voie gazeuse.

6. Procédé selon l'une quelconque des revendications 3 à 5, dans lequel l'étape b) est réalisée en présence d'un flux d'un gaz vecteur circulant du second compartiment dans le premier compartiment.

7. Procédé selon la revendication 1, dans lequel l'étape b) est réalisée par mise en présence dudit support poreux avec un solide poreux comprenant ledit composé organique dans des conditions de température, de pression et de durée telles qu'une fraction dudit composé organique est transférée par voie gazeuse dudit solide poreux audit support poreux.

8. Procédé selon la revendication 7, dans lequel l'étape b) est réalisée par mise en présence sans contact physique dudit support poreux avec ledit solide poreux comprenant ledit composé organique.

9. Procédé selon l'une quelconque des revendications 7 à 8, dans lequel à l'étape b) le support poreux et le solide poreux comprenant ledit composé organique sont de porosité et/ou de nature chimique différente(s).

10. Procédé selon l'une quelconque des revendications 7 à 9, dans lequel à l'issue de l'étape b), le solide poreux contenant le composé organique est séparée dudit support poreux et est renvoyé à l'étape b).

11. Procédé selon l'une quelconque des revendications 1 à 10, dans lequel ledit composé organique est choisi parmi un composé comportant une ou plusieurs fonctions chimiques choisies parmi une fonction carboxylique, alcool, ester, amine, amide, éther, dilactone, carboxyanhydride, aldéhyde, cétone, nitrile, imide, oxime, urée.

12. Procédé selon la revendication 11, dans lequel ledit composé organique comporte au moins une fonction carboxylique choisi parmi l'acide éthanedioïque (acide oxalique), l'acide propanedioïque (acide malonique), l'acide butanedioïque (acide succinique), l'acide 4-oxopentanoïque (acide lévulinique) et l'acide 3-carboxy-3-hydroxypentanedioïque (acide citrique).

13. Procédé selon la revendication 11, dans lequel ledit composé organique comporte au moins une fonction alcool choisi parmi le méthanol, l'éthanol, le phénol, l'éthylène glycol, le propane-1,3-diol, le glycérol, le sorbitol, le diéthylène glycol, les polyéthylène glycol ayant une masse molaire moyenne inférieure à 600 g/mol, le glucose, le fructose et le sucrose sous l'une quelconque de leurs formes isomères.

14. Procédé selon la revendication 11, dans lequel ledit composé organique comporte au moins une fonction amine choisi parmi l'aniline, l'éthylènediamine, le diaminohexane, la tétraméthylènediamine, l'hexaméthylènediamine, la tétraméthyléthylènediamine, la tétraéthyléthylènediamine, la diéthylènetriamine et la triéthylènetétramine.

15. Procédé selon la revendication 11, dans lequel ledit composé organique comporte au moins une fonction amide choisi parmi la formamide, la N-méthylformamide, la N,N-diméthylformamide, la 2-pyrrolidone, la N-méthyl-2-pyrrolidone, la gamma-valérolactame et la N,N'-diméthylurée.
